# EUROPÄISCHE PATENTSCHRIFT

(11) **EP 3 753 386 B1**
(45) Veröffentlichungstag und Bekanntmachung des Hinweises auf die Patenterteilung: **24.12.2025**
(21) Anmeldenummer: 20176400.8
(22) Anmeldetag: 26.05.2020
(51) Int. Cl.: A01B 19/02, A01B 23/02

(54) **VORSPANNEINRICHTUNG UND VORRICHTUNG ZUR LANDWIRTSCHAFTLICHEN BODENBEARBEITUNG**
PRESTRESSING DEVICE AND AGRICULTURAL SOIL WORKING DEVICE
DISPOSITIF DE PRÉCONTRAINTE ET DISPOSITIF DE TRAITEMENT DU SOL AGRICOLE

(30) Priorität: 18.06.2019 DE 102019116518
(43) Veröffentlichungstag der Anmeldung: 23.12.2020
(73) Patentinhaber: Horsch Maschinen GmbH, 92421 Schwandorf (DE)
(72) Erfinder: Horsch, Michael, 92421 Schwandorf (DE)
(74) Vertreter: v. Bezold & Partner Patentanwälte - PartG mbB

(56) Entgegenhaltungen:
- EP-A1- 3 400 764
- DE-A1- 10 007 156
- DE-A1- 102012 214 615
- DE-U1- 202012 004 337
- US-A1- 2013 180 741

## Beschreibung

Die Erfindung betrifft eine Vorspanneinrichtung für eine Vorrichtung zur landwirtschaftlichen Bodenbearbeitung, vorzugsweise einen Striegel. Die Erfindung betrifft auch eine Vorrichtung zur landwirtschaftlichen Bodenbearbeitung, vorzugsweise einen Striegel.

Im Bereich der Landwirtschaft werden bislang typischerweise zwei unterschiedliche Methoden zur Unkrautbekämpfung eingesetzt.

Die erste Methode ist die chemische Unkrautbekämpfung, bei welcher mittels Feldspritzen chemische Unkrautvernichtungsmittel (Pflanzenschutzmittel) über eine Ackerfläche bzw. über eine landwirtschaftliche Nutzfläche verteilt werden. Derartige Pflanzenschutzmittel sind jedoch sehr teuer und können zudem zu Umweltschäden führen. Darüber hinaus können chemische Pflanzenschutzmittel nicht im biologischen Anbau verwendet werden.

Alternativ zu chemischen Pflanzenschutzmitteln kann eine mechanische Bodenbearbeitung durchgeführt werden, z. B. mit Hackgeräten, Striegeln usw. Bei derartigen Maschinen wird Unkraut mittels mechanischen Arbeitswerkzeugen entfernt.

Die EP 2 656 708 B1 offenbart einen Zinkenstriegel mit einem Traggestell und mehreren am Traggestell verschwenkbar angeordneten und über jeweils eine Vorspannfeder gegen einen Anschlag vorgespannten Striegelzinken. Die Vorspannfeder umfasst eine Schraubendruckfeder und eine Schraubenzugfeder. Die Schraubendruckfeder und die Schraubenzugfeder sind so hintereinandergeschaltet, dass beim Beginn der Auslenkung des Striegelzinkens zunächst die Schraubendruckfeder und erst nach einer bestimmten größeren Auslenkung des Striegelzinkens die Schraubenzugfeder zur Wirkung gelangt. Die Schraubendruckfeder geht dann auf Block.

Anders als die EP 2 656 708 B1 sieht die WO 2018 191 767 A1 zur Erzeugung unterschiedlicher Vorspannkräfte die Verwendung von zwei Druckfedern vor, welche quasi in Reihe geschalten werden. Das Federsystem der WO 2018 191 767 A1 ist vergleichsweise aufwendig konstruiert mit einem Rohr, einer im Rohr verschiebbar angeordnet Lochscheibe, in welcher die abgewinkelten Enden eines U-förmiger Drahtbügel eingreifen. Am gegenüberliegenden Ende des Rohrs befindet sich eine Scheibe, die durch Bolzen gegen eine Bewegung fixiert ist. Zwischen den beiden Scheiben befinden sich eine äußere Druckfeder und eine kürzere, innere Druckfeder.

Eine weitere Ausführungsvariante eines Striegels geht aus der EP 1 961 283 B2 hervor. Um eine vereinfachte Verstellung der Vorspannkraft der Striegelzinken zu erreichen, sieht diese vor, dass die Striegelzinken mittels eines zentralen Hydraulikzylinders verstellt werden können. Der Hydraulikzylinder ist oberhalb des Maschinenrahmens und die Vorspannfedern unterhalb des Rahmen angeordnet. Die Anlenkung der Striegelzinken erfolgt jeweils mit mittels Umlenkrollen geführten Zugseilen. Dadurch ergibt sich jedoch eine große Bauhöhe des Striegels, wodurch bspw. größere Arbeitsmaschinen mit einer Arbeitsbreite von 12 m und mehr nur bedingt umgesetzt werden können, da aufgrund der Bauhöhe bspw. eine 180° Klappung nur bedingt oder gar nicht möglich ist. Zudem wird durch die Anordnung der Vorspannfedern unterhalb des Rahmens der sog. Durchgang verringert, wodurch wiederum der Striegel nur bis zu einer geringen Pflanzenhöhe eingesetzt werden kann. Des Weiteren wird zur Übertragung der Bewegung des Zylinders zu den Striegelzinken jeweils ein Seil benötigt, welches zudem mittels Umlenkrollen am Maschinenrahmen geführt werden muss, wodurch wiederum der Striegel bzw. die landwirtschaftliche Maschine kostenintensiv ist.

Die DE 20 2012 004337 U1 offenbart einen Zinkenstriegel mit einem Traggestell und mehreren am Traggestell verschwenkbar angeordneten und über jeweils eine Vorspannfeder gegen einen Anschlag vorgespannten Striegelzinken. Die Vorspannfeder umfasst zwei zusammengehörende Federn, die so hintereinandergeschaltet sind, dass beim Beginn der Auslenkung des Striegelzinkens zunächst die erste Feder und erst nach einer bestimmten größeren Auslenkung des Striegelzinkens die zweite Feder zur Wirkung gelangt. Wenn die Striegelzinken aus einer Anschlagstellung ausgelenkt werden, wird zunächst eine innere erste Feder zusammengedrückt. Erst wenn Führungsstücke in einer vorgegebenen Auslenkstellung des Striegelzinkens zum Anschlag gelangen, wirkt bei einer weiteren Auslenkung des Striegelzinkens eine äußere zweite Feder, die dann auseinandergezogen wird.

Der Erfindung liegt die Aufgabe zu Grunde, eine alternative und/oder verbesserte Vorspanneinrichtung oder Vorrichtung zur landwirtschaftlichen Bodenbearbeitung zu schaffen.

Die Aufgabe wird gelöst durch den Gegenstand gemäß dem unabhängigen Anspruch. Vorteilhafte Weiterbildungen sind in den abhängigen Ansprüchen und der Beschreibung angegeben.

In einem Aspekt betrifft die vorliegende Offenbarung eine Vorspanneinrichtung für eine Vorrichtung zur landwirtschaftlichen Bodenbearbeitung (z. B. zur mechanischen Unkrautbekämpfung), vorzugsweise Striegel (z. B. Hackstriegel, Zinkenstriegel), zum Vorspannen eines verbundenen Bodeneingriffselements, vorzugsweise Striegelzinkens, der Vorrichtung. Die Vorspanneinrichtung weist eine erste Zugfeder (z. B. Schraubenzugfeder) und eine zweite Zugfeder (z. B. Schraubenzugfeder) auf. Die erste Zugfeder und die zweite Zugfeder sind so angeordnet (z. B. miteinander verbunden und/oder verschaltet), dass die zweite Zugfeder erst nach einer vorbestimmten Dehnung der ersten Zugfeder zur Vorspannung des verbundenen Bodeneingriffselements beiträgt und/oder gedehnt wird. Ab der vorbestimmten Dehnung kann die Vorspannung bspw. durch sowohl die erste Zugfeder als auch die zweite Zugfeder bewirkt werden. Alternativ könnte eine Dehnung der ersten Zugfeder bspw. durch einen entsprechenden Anschlag begrenzt sein und die Vorspannung ab Erreichen des Anschlags nur durch die zweite Zugfeder bewirkt werden. Ein solcher Anschlag könnte auch variabel verstellbar sein, um somit bspw. verschiedene Vorspannkräfte mit der ersten Zugfeder zu erreichen.

Die erfindungsgemäße Vorspanneinrichtung bietet einen sehr einfachen und zugleich wirkungsvollen Aufbau. Entweder nur die erste Zugfeder bestimmt die Vorspannung oder beide Zugfedern bestimmen die Vorspannung der Vorspanneinrichtung. Damit kann beispielsweise eine Bodenbearbeitung im Vorauflauf (Zeitraum zwischen Aussaat und dem Aufgang des Saatguts) mittels der ersten Zugfeder und eine Bodenbearbeitung mit bestehenden Kulturpflanzenbestand mittels der ersten und zweiten Zugfeder erfolgen. Die Ausbildung als Zugfedern bietet einen großen Verstellbereich hinsichtlich der Einstellung der Vorspannung. Im Gegensatz zu Druckfedern gehen Zugfedern unter Krafteinwirkung nicht auf Block.

Zweckmäßig kann die erste Zugfeder eine innere Zugfeder und/oder die zweite Zugfeder eine äußere Zugfeder sein. Es ist auch möglich, dass die erste und zzeite Zugfeder nebeneinander und/oder hintereinander angeordnet sind. Bspw. kann eine Dehnung der ersten Zugfeder mit einem mechanischen Anschlag begrenzt sein.

In einem Ausführungsbeispiel sind die erste Zugfeder und die zweite Zugfeder koaxial angeordnet. Alternativ oder zusätzlich ist die erste Zugfeder zumindest teilweise, vorzugsweise vollständig, innerhalb der zweiten Zugfeder angeordnet. Damit kann ein für die Vorspanneinrichtung erforderlicher Bauraum verkleinert werden.

In einem weiteren Ausführungsbeispiel sind erste Endbereiche der ersten Zugfeder und der zweiten Zugfeder relativ zueinander festgelegt, vorzugsweise mittelbar oder unmittelbar. Damit sind die ersten Endbereiche zweckmäßig nicht oder nicht wesentlich bewegbar zueinander. Bspw. können die ersten Endbereiche beide an dem verbundenen Bodeneingriffselement befestigt sein oder die ersten Endbereiche können aneinander befestigt sein und nur einer der ersten Endbereiche ist an dem Bodeneingriffselement befestigt. Alternativ oder zusätzlich sind zweite Endbereiche der ersten Zugfeder und der zweiten Zugfeder relativ zueinander bewegbar.

Zweckmäßig können die ersten Endbereiche gleich ausgerichtet sein, und/oder die zweiten Endbereiche können gleich ausgerichtet sein.

Vorzugsweise können die ersten Endbereiche dem verbunden Bodeneingriffselement zugewandte Endbereiche sein, und/oder die zweiten Endbereiche können dem verbunden Bodeneingriffselement abgewandte Endbereiche sein.

In einer Weiterbildung sind die ersten Endbereiche durch eine gemeinsame Anbringung an dem verbundenen Bodeneingriffselement zueinander festgelegt. Es ist auch möglich, dass die ersten Endbereiche direkt miteinander verbunden sind. Es ist ebenfalls möglich, dass die ersten Endbereiche mittels Formschluss aneinander festgelegt sind. Beispielsweise kann der erste Endbereich der ersten Zugfeder eine, vorzugsweise konusförmige, Querschnittserweiterung zur Festlegung relativ zu der zweiten Zugfeder aufweisen. Damit steht eine Vielzahl von miteinander kombinierbaren Varianten zur Festlegung der ersten Endbereiche der Zugfedern aneinander zur Verfügung, die je nach Anforderung ausgewählt werden können.

In einem weiteren Ausführungsbeispiel bildet der zweite Endbereich der zweiten Zugfeder einen (z. B. mittelbaren oder unmittelbaren), vorzugsweise konusförmigen, Anschlag für den zweiten Endbereich der ersten Zugfeder. Es ist bevorzugt möglich, dass bevor der zweite Endbereich der ersten Zugfeder den Anschlag erreicht, die Vorspannung nur durch die erste Zugfeder bewirkt ist. Alternativ oder zusätzlich ist bevorzugt möglich, dass erst ab Erreichen des Anschlags durch den zweiten Endbereich der ersten Zugfeder, die Vorspannung von der ersten Zugfeder und der zweiten Zugfeder oder nur von der zweiten Zugfeder bewirkt ist. Damit kann auf einfache Weise eine durch die Vorspanneinrichtung bewirkte Vorspannung in einem niedrigen Kraftbereich und in einem hohen Kraftbereich eingestellt werden. Es muss kein gesonderter Anschlag für die erste Zugfeder vorgesehen sein.

In einer Ausführungsform ist an dem zweiten Endbereich der ersten Zugfeder ein bewegbares Zugelement, vorzugsweise ein Zugseil, zum Anpassen einer durch die Vorspanneinrichtung bewirkten Vorspannung des verbundenen Bodeneingriffselementes angebracht. Bevorzugt kann sich der zweite Endbereich der ersten Zugfeder zum Halten des Zugelements verjüngen, zum Beispiel konusförmig. Alternativ oder zusätzlich kann beispielsweise der zweite Endbereich der ersten Zugfeder ein, vorzugsweise konusförmiges, Halteelement zum Halten des Zugelements halten, vorzugsweise umgreifen.

In einem weiteren unabhängigen oder kombinierbaren Aspekt betrifft die vorliegende Offenbarung eine Vorrichtung zur landwirtschaftlichen Bodenbearbeitung (z. B. zur mechanischen Unkrautbekämpfung), vorzugsweise Striegel (z. B. Hackstriegel, Zinkenstriegel). Die Vorrichtung weist mehrere, vorzugsweise verschwenkbare, Bodeneingriffselemente, bevorzugt Striegelzinken, zur Bodenbearbeitung auf. Die Vorrichtung weist mehrere Vorspanneinrichtungen auf, die zum Vorspannen der mehreren Bodeneingriffselemente angeordnet sind (zum Beispiel je eine Vorspanneinrichtung für je ein Bodeneingriffselement).

Es ist möglich, dass die mehreren Vorspanneinrichtungen wie hierin offenbart ausgeführt sind. Die Vorspanneinrichtungen können jedoch auch anders ausgeführt sein. Es wird explizit darauf hingewiesen, dass die nachfolgenden Beispiele der Vorrichtung unabhängig von der hierin offenbarten Konfiguration der Vorspanneinrichtungen offenbart sind und ausgeführt werden können.

In einem Ausführungsbeispiel sind die mehreren Vorspanneinrichtungen an einem freien, bodenabgewandten Ende mit den mehreren Bodeneingriffselementen verbunden.

In einem weiteren Ausführungsbeispiel weist die Vorrichtung ein Traggestell, das die mehreren Bodeneingriffselemente, vorzugsweise verschwenkbar, trägt, auf. Es ist bspw. auch möglich, dass die mehreren Vorspanneinrichtungen mit den mehreren Bodeneingriffselementen bspw. oberhalb des Traggestells verbunden sind. Damit kann ein Durchgang unterhalb des Traggestells vergrößert werden, sodass die Vorrichtung auch noch bei hohen Kulturpflanzen eingesetzt werden kann.

In einem weiteren Ausführungsbeispiel weist die Vorrichtung mehrere Zugelemente, vorzugsweise Zugseile, auf, die die mehreren Vorspanneinrichtungen mit einer, vorzugsweise motorischen, Verstelleinrichtung zum Verändern der Vorspannung verbinden. Vorzugsweise kann die Verstelleinrichtung einen (z. B. hydraulischen, pneumatisch, elektrischen) Linearzylinder, bevorzugt Gleichlaufzylinder, zum Bewegen (z. B. Ziehen) der mehreren Zugelemente aufweisen. Es ist möglich, dass die Verstelleinrichtung an einem hinteren Ende der Vorrichtung (z. B. einem hinteren Ende des Traggestells der Vorrichtung) angeordnet ist.

In einer Weiterbildung ist die Verstelleinrichtung manuell einstellbar. Alternativ oder zusätzlich ist die Verstelleinrichtung selbsttätig oder automatisch einstellbar. Vorzugweise kann die selbsttätige oder automatische Einstellung in (z. B. unmittelbarer oder mittelbarer) Abhängigkeit von einer (z. B. sensorgestützt, vorzugsweise direkt oder indirekt, erfassten) Ausrichtung der Bodeneingriffselemente zum Beispiel bezüglich eines Traggestells der Vorrichtung, einer (z. B. sensorgestützt, vorzugsweise direkt oder indirekt, erfassten) Arbeitstiefe zumindest eines der Bodeneingriffselemente und/oder einer (z. B. sensorgestützt, vorzugsweise direkt oder indirekt, erfassten) Vorspannkraft zumindest einer der mehreren Vorspanneinrichtungen erfolgen.

In einer weiteren Ausführungsform verbinden die mehreren Zugelemente die mehreren Vorspanneinrichtungen mit einem zum Verändern der Vorspannung (z. B. an einem Traggestell der Vorrichtung) verschwenkbaren Querelement, vorzugsweise Querstange oder Querrohr, der Verstelleinrichtung, vorzugsweise direkt und/oder ohne Umlenkrolle(n). Vorzugsweise kann das Querelement in einem Winkelbereich zwischen 0° und 60° oder mehr verschwenkbar sein, vorzugsweise zum Bewirken einer Vorspannung in einem Bereich zwischen 0 g/mm und 500 g/mm. Es ist möglich, dass das Querelement über einen Schwenkarm und/oder eine Schwenkachse, die an einem Traggestell der Vorrichtung (zum Beispiel in Längsträgern des Traggestells) getragenen ist, verschwenkbar ist.

Es ist möglich, dass die Schwenkachse beispielsweise im Wesentlichen auf einer Höhe mit den vorzugsweise drehbaren Querelementen, die die Bodeneingriffselemente tragen, ist, zum Vorsehen einer geringen Bauhöhe der Vorrichtung.

In einem weiteren Ausführungsbeispiel weist die Vorrichtung ein (z. B. rahmenförmiges) Traggestell auf, das die mehreren Bodeneingriffselemente beispielsweise schwenkbar trägt und/oder die Verstelleinrichtung beispielsweise schwenkbar trägt. Es ist möglich, dass das Traggestell zur Kopplung an ein Zugfahrzeug (z.B. Traktor) bzw. ein Schleppfahrzeug ausgebildet ist.

In einer Weiterbildung sind die mehreren Vorspanneinrichtungen, die mehrere Zugelemente und/oder die Verstelleinrichtung im Wesentlichen oberhalb des Traggestells angeordnet. Es ist möglich, dass die mehreren Vorspanneinrichtungen und/oder die mehrere Zugelemente im Wesentlichen horizontal und/oder im Wesentlichen parallel zum Traggestell ausgerichtet sind. Dies kann insgesamt eine geringe Bauhöhe des Traggestells ermöglichen, wodurch beispielsweise große Arbeitsbreiten durch ein zumindest teilweise klappbares Traggestell ermöglicht werden können.

In einer Ausführungsvariante weist das Traggestell mehrere, vorzugsweise über Kopf, einklappbare Segmente zum Verringern einer Breite der Vorrichtung zum Transportieren der Vorrichtung auf. Damit kann eine Breite der Vorrichtung beispielsweise auf eine im Straßenverkehr zulässige Breite verringert werden, wenn die Vorrichtung auf dem Weg zur oder von der Arbeit auf öffentlichen Straßen bewegt wird.

In einer weiteren Ausführungsvariante trägt das Traggestell mehrere, vorzugsweise in einer Längsrichtung der Vorrichtung beabstandete und/oder drehbare, Querelemente, die die mehreren Bodeneingriffselemente tragen. Die Querelemente können beispielsweise auf einer Höhe mit und/oder in dem Traggestell angeordnet sein. Beispielsweise kann das Traggestell zwei Längsträger aufweisen, in denen Querelemente drehbar gelagert sind.

In einem Ausführungsbeispiel teilen sich jeweils mindestens zwei Vorspanneinrichtungen ein Zugelement, vorzugsweise Zugseil, zur Verbindung mit einer, vorzugsweise motorischen, Verstelleinrichtung der Vorrichtung. Damit kann beispielsweise eine Anzahl an Zugelementen und eine Anzahl an Anbringungspunkten an dem vorzugsweise schwenkbaren Querelement der Verstelleinrichtung verringert werden. Eine Verwendung von einem Zugelement für mehrere Vorspanneinrichtungen kann darüber hinaus den Vorteil haben, dass ein Durchhängen der Zugelemente verhindert oder zumindest verringert wird.

In einer Weiterbildung sind die jeweils zwei Vorspanneinrichtungen mit entgegengesetzten Enden des Zugelements verbunden, vorzugsweise daran angebracht. Es ist möglich, dass die mit den jeweils zwei Vorspanneinrichtungen verbundenen Bodeneingriffselemente bezüglich einer Querrichtung und/oder einer Längsrichtung der Vorrichtung voneinander beabstandet sind, vorzugsweise direkt benachbart zueinander. Es ist auch möglich, dass die mehreren Bodeneingriffselemente bezüglich einer Längsrichtung der Vorrichtung in mehreren Reihen angeordnet sind und bspw. die mit den jeweils zwei Vorspanneinrichtungen verbundenen Bodeneingriffselemente in unterschiedlichen Reihen angeordnet sind, vorzugsweise in direkt benachbarten Reihen.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Draufsicht auf eine Vorrichtung zur landwirtschaftlichen Bodenbearbeitung gemäß einem Ausführungsbeispiel der vorliegenden Offenbarung;
- Figur 2: eine Seitenansicht der beispielhaften Vorrichtung;
- Figur 3: eine Schnittansicht durch eine beispielhafte Vorspanneinrichtung im entspannten Zustand;
- Figur 4: eine Schnittansicht durch die beispielhafte Vorspanneinrichtung von Figur 3 im teilweise gedehnten Zustand;
- Figur 5: eine perspektivische Ansicht der beispielhaften Vorspanneinrichtung von Figur 3 im teilweise gedehnten Zustand;
- Figur 6: eine Anordnung von beispielhaften Vorspanneinrichtungen;
- Figur 7: Schnittansichten durch eine weitere beispielhafte Vorspanneinrichtung in unterschiedlich gedehnten Zuständen; und
- Figur 8: perspektivische Ansichten durch die weitere beispielhafte Vorspanneinrichtung von Figur 7 in unterschiedlich gedehnten Zuständen.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

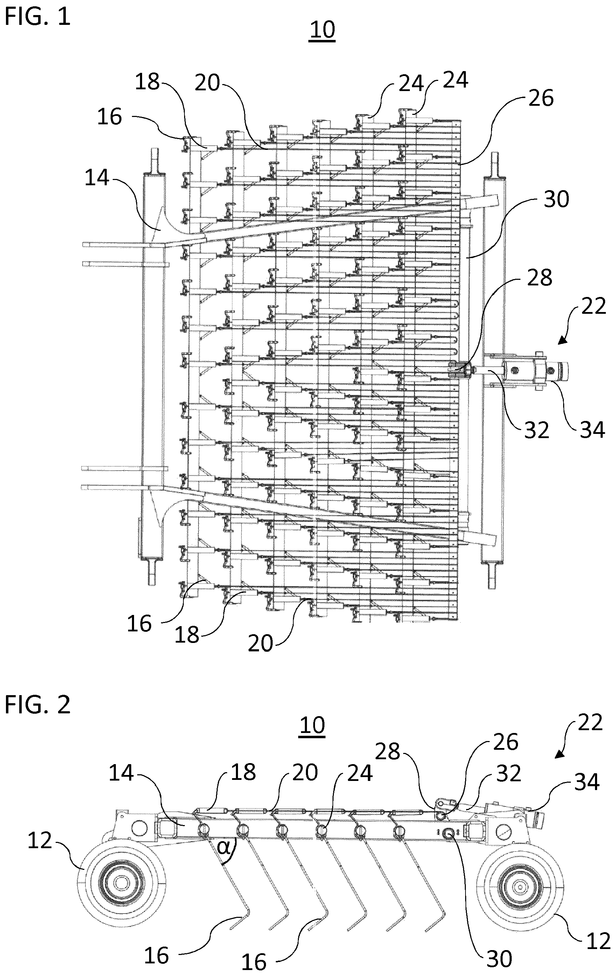

In den Figuren 1 und 2 ist eine Vorrichtung 10 zur landwirtschaftlichen Bodenbearbeitung gezeigt. Zweckmäßig dient die Vorrichtung 10 der mechanischen Unkrautbekämpfung, vorzugsweise in landwirtschaftlichen Reihenkulturen. In einem besonders bevorzugten Ausführungsbeispiel ist die Vorrichtung 10 als ein Zinkenstriegel ausgeführt, wie in den Figuren 1 und 2 dargestellt ist.

Die Vorrichtung 10 kann an ein Zugfahrzeug bzw. Schleppfahrzeug (nicht dargestellt), zum Beispiel einem Traktor, gekoppelt werden. Im Betrieb zieht das Zugfahrzeug die Vorrichtung 10 über eine landwirtschaftliche Arbeitsfläche (zum Beispiel Acker), auf der die Vorrichtung 10 eine Bodenbearbeitung durchführt. Die Vorrichtung 10 kann dabei beispielsweise durch mehrere drehbare Räder 12 (nur in Figur 2 dargestellt) auf dem Boden abgestützt sein. Es ist allerdings auch möglich, dass die Vorrichtung 10 in einer selbstfahrenden landwirtschaftlichen Arbeitsmaschine integriert ist. Das heißt, die Vorrichtung 10 muss nicht gesondert von einem Zugfahrzeug über die landwirtschaftliche Arbeitsfläche gezogen werden.

Die beispielhafte Vorrichtung 10 weist vorzugsweise ein Traggestell 14, mehrere Bodeneingriffselemente 16, mehrere Vorspanneinrichtungen 18, mehrere Zugelemente 20 und eine Verstelleinrichtung 22 auf. Aus Gründen der Übersichtlichkeit sind in den Figuren 1 und 2 nur einige der Bodeneingriffselemente 16, Vorspanneinrichtungen 18 und Zugelemente 20 mit einem eigenen Bezugszeichen versehen.

Das Traggestell 14 ist über die Räder 12 auf dem Boden abgestützt. Das Traggestell 14 trägt die mehreren Bodeneingriffselemente 16. Die mehreren Bodeneingriffselemente 16 sind in mehreren Reihen getragen. Die Reihen sind bezüglich einer Längsrichtung des Traggestells 14 parallel und beabstandet zueinander. Über die mehreren Reihen hinweg betrachtet sind die Bodeneingriffselemente 16 bezüglich einer Querrichtung der Vorrichtung 10 versetzt zueinander angeordnet.

Das Traggestell 14 kann zweckmäßig rahmenförmig ausgeführt sein, zum Beispiel mit zwei Längsträgern, an deren Enden jeweils Achskörper zum Tragen der Räder 12 angeordnet sind. Die Achskörper dienen auch als Querträger des Traggestells 14. Ein Abstand der Längsträger des Traggestells 14 zueinander kann sich entgegen der Vorwärtsfahrtrichtung erweitern. An dessen vorderem Ende kann das Traggestell 14 an ein Schleppfahrzeug gekoppelt werden.

Das Traggestell 14 kann zweckmäßig mehrere Querelemente 24 tragen. Aus Gründen der Übersichtlichkeit sind in den Figuren 1 und 2 nur einige Querelemente 24 mit einem eigenen Bezugszeichen versehen. Im dargestellten Ausführungsbeispiel sind sechs Querelemente 24 umfasst; mehr oder weniger Querelemente 24 sind möglich. Die Querelemente 24 sind auf gleicher Höhe mit dem Traggestell 14, insbesondere den Längsträgern des Traggestells 14, angeordnet. Die Querelemente 24 sind also insbesondere nicht unterhalb des Traggestells 14 angeordnet. Dies kann eine kompakte Bauhöhe begünstigen und eine Größe eines Durchgangs unterhalb des Traggestells 14 erhöhen.

Jedes Querelement 24 trägt eine Reihe der Bodeneingriffselemente 16 entlang dessen Länge. Die Querelemente 24 können beispielsweise als Querstangen oder Querrohre ausgeführt sein. Die Querelemente 24 sind parallel zu einer Querrichtung des Traggestells 14 ausgerichtet. Die Querelemente 24 sind zweckmäßig drehbar gelagert, insbesondere in Längsträgern des Traggestells 14. Die Bodeneingriffselemente 16 können über die Querelemente 24 verschwenkt werden. Die Querelemente 24 können unterschiedlich lang sein, zum Beispiel in länger werdender Reihenfolge entgegen einer Vorwärtsfahrtrichtung der Vorrichtung 10. Damit können beispielsweise die hinteren Querelemente 24 mehr und/oder die äußersten der mehreren Bodeneingriffselemente 16 der Vorrichtung 10 tragen.

Es ist auch möglich, dass die Querelemente 24 (dreh-)fest mit dem Traggestell 14 verbunden sind. Die Bodeneingriffselemente 16 können dann bspw. schwenkbar bzw. drehbar mit den Querelementen 24 verbunden sein, z. B. mittels entsprechende Montageelemente. Bspw. könnten an den Querelementen 24 jeweils an der Unterseite mittels einer Schraube aus bspw. Kunststoff gefertigte Halbschalen montiert sein. In den Halbschalen können die Bodeneingriffselemente 16 drehbar gelagert sein. Dies kann bspw. den Vorteil haben, dass zum einen die Rahmenkonstruktion stabiler wird und zum anderen nur jeweils eine Schraube je Bodeneingriffselement 16 benötigt wird.

Die Bodeneingriffselemente 16 dienen zweckmäßig der mechanischen Unkrautbekämpfung. Während die Vorrichtung 10 über die Ackerfläche gezogen wird, greifen die Bodeneingriffselemente 16 in den Ackerboden ein. Dabei kann ungewünschtes Unkraut entwurzelt, herausgerissen, zerkleinert und/oder mit Erde bedeckt werden. Die Kulturpflanzen sind noch nicht gekeimt bzw. bis in den Eingriffsbereich der Bodeneingriffselemente gewachsen (Blindstriegeln) oder sind bereits stärker als das Unkraut und bleiben stehen. Die Eingriffswirkung im Boden hängt u.a. von der Vorspannung der Bodeneingriffselemente 16 ab. Besonders bevorzugt sind die Bodeneingriffselemente 16 als sogenannte Striegelzinken ausgeführt, wie dargestellt ist. Andere Formen und Ausführungen für die Bodeneingriffselemente 16 sind möglich. Die Kraft und somit Tiefe, mit der die Bodeneingriffselemente 16 in den Boden eindringen, ist über die Vorspanneinrichtungen 18 und die Verstelleinrichtung 22 einstellbar.

Oberhalb, vorzugsweise direkt oberhalb, der Querelemente 24 und des Traggestells 14 sind die Vorspanneinrichtungen 18 und die Zugelemente 20 angeordnet. Die Vorspanneinrichtungen 18 und die Zugelemente 20 sind im Wesentlichen in einer Horizontalebene ausgerichtet und verlaufen im Wesentlichen parallel zum Traggestell 14. Dies begünstigt wiederum eine geringe Bauhöhe der Vorrichtung 10.

Das beispielhafte Traggestell 14 weist lediglich ein Segment auf. Es ist jedoch auch möglich, dass das Traggestell 14 mehrere Segmente mit Bodeneingriffselementen 16 aufweist, zum Beispiel zwei, drei oder fünf Segmente. Eine erhöhte Anzahl an Segmenten kann bspw. eine vergrößerte Arbeitsbreite der Vorrichtung 10 ermöglichen, zum Beispiel von bis zu 12 m, 15 m, 18 m oder 24 m. Die Segmente können in einer Querrichtung der Vorrichtung 10 nebeneinander angeordnet sein. Zweckmäßig können die äußeren Segmente klappbar mit dem oder den inneren Segmenten verbunden sein. Somit können die äußeren Segmente eingeklappt werden, z. B. in einem Winkelbereich 180° oder kleiner, um eine Breite der Vorrichtung 10 zu verringern. So kann beispielsweise eine für eine öffentliche Straße zulässige Transportbreite der Vorrichtung 10 erreicht werden. Die Implementierung der Klappfunktionalität wird durch die geringe Bauhöhe der Vorrichtung 10 und insbesondere des Traggestells 14 ermöglicht oder zumindest begünstigt.

Über die Vorspanneinrichtungen 18, die Zugelemente 20 und die Verstelleinrichtung 22 kann eine Vorspannung der Bodeneingriffselemente 16 eingestellt werden. Die gewünschte Arbeitstiefe der Bodeneingriffselemente 16 kann über die Vorspannung beeinflusst werden.

Die Vorspanneinrichtungen 18 sind an einem freien, bodenabgewandten Ende der Bodeneingriffselemente 16 angebracht. Die Vorspanneinrichtungen 18 sind elastisch verformbar, vorzugsweise dehnbar. Der Grad der elastischen Verformung beeinflusst die Vorspannung der Bodeneingriffselemente 16. In Abhängigkeit von einer durch die Zugelemente 20 und die Verstelleinrichtung 22 bewirkten Zugkraft und einer Federkonstante der Vorspanneinrichtungen 18 ergibt sich die Vorspannung.

An einem den Bodeneingriffselementen 16 abgewandten Ende sind die Vorspanneinrichtungen 18 mit den Zugelementen 20 verbunden. Die Zugelemente 20 sind bevorzugt als Zugseile ausgeführt. Die Zugelemente 20 verbinden die Vorspanneinrichtungen 18 mit einem Querelement 26 der Verstelleinrichtung 22. Die Zugelemente 20 können an dem Querelement 26 festgelegt sein,
Das Querelement 26 kann sich quer zur Längsrichtung der Vorrichtung 10 erstrecken. Das Querelement 26 kann zweckmäßig im hinteren Bereich der Vorrichtung 10 angeordnet sein. Das Querelement 26 kann beispielsweise als ein Querrohr oder eine Querstange ausgeführt sein.

Beispielsweise kann das Querelement 26 schwenkbar mit dem Traggestell 14 verbunden sein. Mindestens ein Schwenkarm 28 kann das Querelement 26 tragen. Der Schwenkarm 28 ist fest mit einer Schwenkachse 30 verbunden. Die Schwenkachse 30 erstreckt sich quer zur Längsrichtung der Vorrichtung 10. Die Schwenkachse 30 ist drehbar im Traggestell 14 gelagert, z. B. in den Längsträgern des Traggestells 14. Die Schwenkachse 30 verläuft parallel zum Querelement 26. Die Schwenkachse 30 ist von dem Traggestell 14, vorzugsweise von Längsträgern des Traggestells 14, getragen. Ein Verschwenken des Querelements 26 mittels des Schwenkarms 28 und der Schwenkachse 30 bewegt die Zugelemente 20. Die Zugelemente 20 beaufschlagen/dehnen die Vorspanneinrichtungen 18 entsprechend. Beim Verschwenken bleibt das Querelement 26 bevorzugt stets oberhalb des Traggestells 14.

Beispielsweise kann das Querelement 26 bzw. der Schwenkarm 28 in einem Winkelbereich zwischen 0° und 60° verschwenkbar sein. Damit kann je nach Ausführung der Vorspanneinrichtungen 18 beispielsweise eine Vorspannung in einem Bereich zwischen 0 g/mm Verstellweg und 500 g/mm Verstellweg eingestellt werden.

Bevorzugt ist die Verstelleinrichtung 22 motorisch angetrieben. Bevorzugt weist die Verstelleinrichtung 22 einen Linearzylinder (Arbeitszylinder), vorzugsweise Gleichlaufzylinder, auf. Der Linearzylinder kann beispielsweise pneumatische, elektrisch oder hydraulisch angetrieben sein. Mittels des Linearzylinders kann das Querelement 26 bzw. der Schwenkarm 28 verschwenkt werden. Beispielsweise kann eine ein- und ausfahrbare Kolbenstange 32 des Linearzylinders an dem Schwenkarm 28, zum Beispiel einem freien Ende des Schwenkarms 28, schwenkbar angebracht sein. Ein Zylindergehäuse 34 des Linearzylinders kann wiederum schwenkbar an dem Traggestell 14 angebracht sein. Ein Ausfahren der Kolbenstange 32 verschwenkt das Querelement 26 in einer Vorwärtsfahrtrichtung bzw. in einer Richtung zu den Vorspanneinrichtungen 18. Eine durch die Vorspanneinrichtungen 18 bewirkte Vorspannung wird verringert. Ein Einfahren der Kolbenstange 32 verschwenkt das Querelement 26 entgegen der Vorwärtsfahrtrichtung bzw. in einer Richtung weg von den Vorspanneinrichtungen 18. Eine durch die Vorspanneinrichtungen 18 bewirkte Vorspannung wird vergrößert.

In Ausführungsformen mit einem Traggestell, das mehrere vorzugsweise klappbare Segmente aufweist, können entsprechend mehrere Verstelleinrichtungen umfasst sein. Die mehreren Verstelleinrichtungen können bspw. gleich oder verschieden angesteuert und/oder ausgebildet sein, z. B. in Abhängigkeit von einer Anzahl an Bodeneingriffselementen je Segment und/oder einer Segmentbreite.

Es ist auch möglich, dass die Verstelleinrichtung anders als hier beispielhaft beschrieben ausgeführt ist, zum Beispiel als eine drehbare Welle zum Auf- und Abwickeln der Zugelemente 20. Die Welle kann manuell und oder motorisch angetrieben werden.

Eine Verstellung der Verstelleinrichtung 22 kann mittels manueller Eingabe erfolgen. Es ist allerdings auch möglich, dass die Verstellung der Verstelleinrichtung 22 zumindest teilweise selbsttätig oder automatisch erfolgt. Eine automatische Einstellung der Verstelleinrichtung 22 kann beispielsweise in Abhängigkeit von einem oder mehreren zweckmäßig sensorgestützt erfassten Parametern erfolgen. Als Parameter kommen beispielsweise eine Ausrichtung der Bodeneingriffselemente 16 bezüglich des Traggestells 14 (siehe Winkel α in Figur 2), eine Arbeitstiefe der Bodeneingriffselemente 16 und/oder einer Vorspannkraft der Vorspanneinrichtungen 18 infrage. Die Erfassung kann beispielsweise direkt an der entsprechenden Komponente mittels eines Sensors erfolgen, zum Beispiel mittels eines Winkelsensors am Traggestell 14 zur Erfassung der Ausrichtung. Es kann beispielsweise auch ein Kraftsensor zur direkten Erfassung der Vorspannkraft eingesetzt werden. Es ist allerdings auch möglich, dass der mindestens eine Parameter indirekt erfasst wird, beispielsweise aus einem erfassten Motorstrom oder einem erfassten Arbeitsdruck der Verstelleinrichtung 22.

Die Verstelleinrichtung 22 kann einen hinteren Bereich der Vorrichtung 10 bilden. Es können Abstandshalter hinten an der Verstelleinrichtung 22, z. B. an dem Zylindergehäuse 34, angebracht werden.

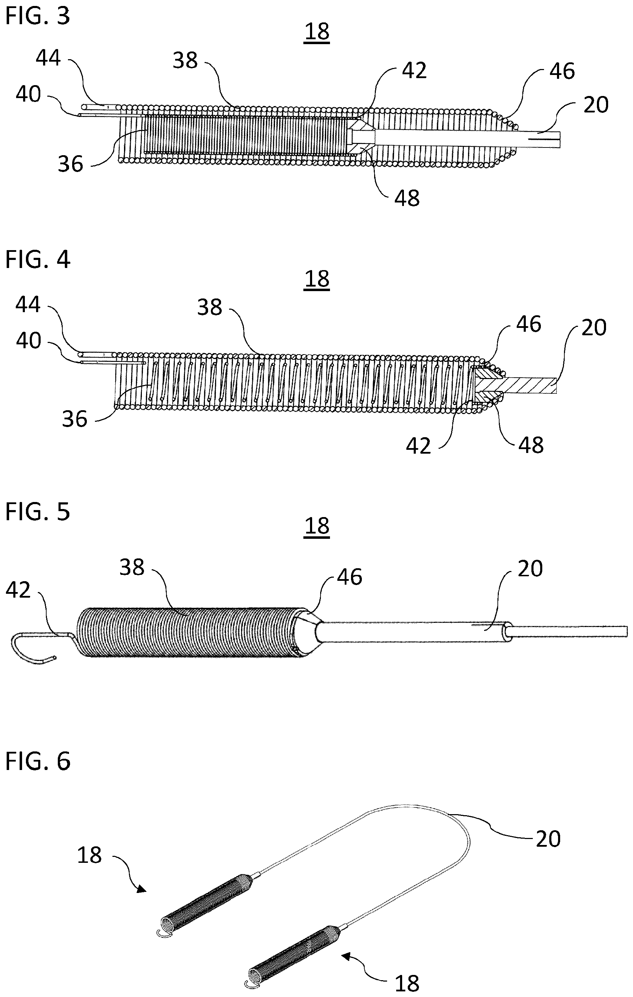

In den Figuren 3 bis 6 und 7 bis 8 sind besonders bevorzugte Ausführungsvarianten für die Vorspanneinrichtungen 18 abgebildet. Bevorzugt weisen die Vorspanneinrichtungen 18 zwei Zugfedern auf, die so hintereinander geschaltet angeordnet sind, dass eine der Zugfedern erst nach einer vorbestimmten Dehnung der anderen Zugfeder zur Vorspannung eines verbundenen Bodeneingriffselements 16 beiträgt bzw. gedehnt wird. Die Vorspanneinrichtungen 18 können jedoch, wenn gewünscht, auch anders ausgeführt sein.

Die Figuren 3 bis 6 zeigen eine erste Ausführungsvariante für die Vorspanneinrichtungen 18.

Die Vorspanneinrichtung 18 weist eine erste Zugfeder 36 und eine zweite Zugfeder 38 auf. Die Zugfedern 36, 38 sind koaxial angeordnet. Die zweite Zugfeder 38 umgibt die erste Zugfeder 36.

Die erste Zugfeder 36 ist als innere Zugfeder innerhalb der zweiten, äußeren Zugfeder 38 angeordnet. Die Zugfedern 36, 38 sind als Schraubenzugfedern ausgeführt.

Die erste Zugfeder 36 erstreckt sich zwischen einem ersten Endbereich 40 und einem zweiten Endbereich 42. Die zweite Zugfeder 38 erstreckt sich zwischen einem ersten Endbereich 44 und einem zweiten Endbereich 46. Die ersten Endbereiche 40, 44 sind diejenigen Endbereiche der Zugfeder 36, 38, die dem jeweils verbundenen Bodeneingriffselement 16 zugewandt sind. Die zweiten Endbereiche 42, 46 sind diejenigen Endbereiche der Zugfedern 36, 38 die von dem jeweils verbundenen Bodeneingriffselement 16 abgewandt sind.

Die ersten Endbereichen 40, 44 sind mit einem der Bodeneingriffselemente 16 (siehe Figuren 1 und 2) verbunden, insbesondere daran angebracht, z. B. mittels Befestigungsbügeln. Die ersten Endbereiche 40, 44 sind zueinander festgelegt. Es ist möglich, dass die ersten Endbereiche 40, 44 beispielsweise direkt miteinander verbunden sind (nicht dargestellt). Prinzipiell können die ersten Endbereiche 40, 44 mittelbar (zum Beispiel durch gemeinsame Verbindung mit dem Bodeneingriffselement 16) oder unmittelbar (zum Beispiel durch gemeinsame Verbindung aneinander) im Wesentlich zueinander festgelegt sein.

Die zweiten Endbereiche 42, 46 der Zugfedern 36, 38 sind zueinander bewegbar. Das Zugelement 20 ist an dem zweiten Endbereich 42 der ersten Zugfeder 36 angebracht. Im Einzelnen kann das Zugelement 20 beispielsweise an einem zweckmäßig konusförmigen Halteelement 48 befestigt sein. Das Halteelement 48 kann an dem zweiten Endbereich 42 der ersten Zugfeder 36 angebracht sein, zum Beispiel von diesem umgriffen sein. Das Zugelement 20 durchdringt den zweiten Endbereich 46 der zweiten Zugfeder 38.

Die Figur 3 zeigt die Vorspanneinrichtung 18 ohne wesentlichen Dehnung der Zugfedern 36, 38. Wird das Zugelement 20 nun in einer Richtung weg von der Vorspanneinrichtung 18 gezogen, wird zunächst nur die erste Zugfeder 36 gedehnt. Wenn nur die erste Zugfeder 36 gedehnt ist, bewirkt nur die erste Zugfeder 36 die Vorspannung der Vorspanneinrichtung 18. Die Vorspannung ist somit vergleichsweise gering, wodurch die Arbeitstiefe der Bodeneingriffselemente 16 ebenfalls gering ist (zum Beispiel für das Blindstriegeln).

Ist beispielsweise eine größere Arbeitstiefe gewünscht und/oder ist die Ackerfläche entsprechend hart, kann das Zugelement 20 weiter in einer Richtung weg von der Vorspanneinrichtung 18 gezogen werden. Die erste Zugfeder 36 wird weiter gedehnt, bis der zweiten Endbereich 42 der ersten Zugfeder 36 den zweite Endbereich 46 der zweiten Zugfeder 38 erreicht. Der zweiten Endbereich 46 wirkt als vorzugsweise konusförmiger Anschlag für den zweiten Endbereich 42 bzw. das Halteelement 48 (siehe Figur 4). Wird das Zugelement 20 weiter in einer Richtung weg von der Vorspanneinrichtung 18 gezogen, dehnen sich nunmehr sowohl die erste Zugfeder 36 als auch die zweite Zugfeder 38. Die zweite Zugfeder 38 wird über das Halteelement 48 von den Zugelement 20 bis auf ein gewünschtes Maß gedehnt. Die Vorspannung kann so deutlich erhöht werden, da nun auch die zweite Zugfeder 38 zu der Vorspannung beiträgt. Die Arbeitstiefe der Bodeneingriffselemente 16 wird erhöht (zum Beispiel für ein Striegeln mit bereits gestärkten Kulturpflanzen).

In der Figur 6 ist dargestellt, dass es möglich ist, jeweils zwei Vorspanneinrichtungen 18 durch ein gemeinsames Zugelement 20 zu koppeln. Ein Ende des Zugelements 20 ist mit einer der Vorspanneinrichtung 18 und ein entgegengesetztes Ende des Zugelements 20 ist mit der anderen Vorspanneinrichtung 18 verbunden. Das gemeinsame Zugelement 20 ist an den Querelement 26 (siehe Figuren 1 und 2) festgelegt. Vorteilhaft muss so nicht für jede Vorspanneinrichtung 18 ein eigenes Zugelement vorgesehen und an den Querelement 26 festgelegt werden. Unter Bezugnahme auf die Figuren 1 und 2 werden vorzugsweise zueinander benachbarte Vorspanneinrichtungen 18 miteinander verbunden, zum Beispiel benachbarte Vorspanneinrichtungen 18 für Bodeneingriffselemente 16, die direkt benachbart zueinander in direkt benachbarten Reihen zueinander angeordnet sind.

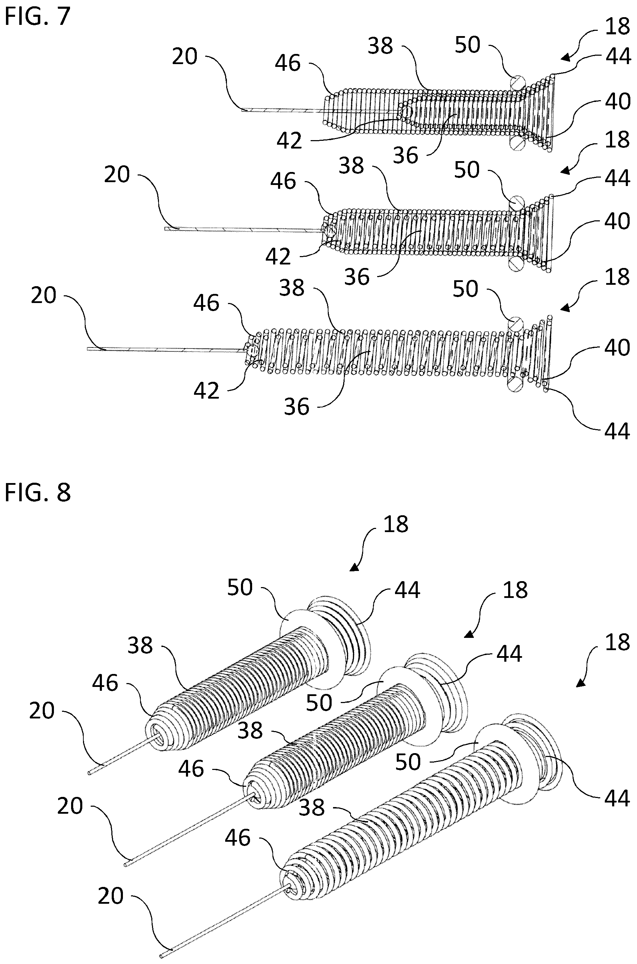

Die Figuren 7 und 8 zeigen eine weitere Ausführungsvariante für die Vorspanneinrichtungen 18.

Gemäß dieser Ausführungsvariante sind die ersten Endbereiche 40, 44 der Zugfedern 36, 38 durch Formschluss aneinander festgelegt. Beide erste Endbereiche 40, 44 erweitern sich, z. B. konusförmig. Ein zusätzlicher Ring 50, der die ersten Endbereiche 40, 44 umschließt, kann die Festlegung der ersten Endbereiche 40, 44 zueinander verstärken. Das jeweils verbundene Bodeneingriffselement 16 kann beispielsweise an dem Ring 50 oder an den ersten Endbereichen 40 und/oder 44 mit der Vorspanneinrichtung 18 verbunden werden.

Die zweiten Endbereiche 42, 46 können sich verjüngen, z. B. konusförmig. Der zweite Endbereich 42 kann selbst direkt an den als Anschlag wirkenden zweite Endbereich 46 anschlagen, wenn die erste Zugfeder 36 entsprechend gedehnt wird (jeweils mittlere und untere Abbildung in Figur 7 und Figur 8). Ein separates Halteelement wie in der Ausführungsvariante der Figuren 3 bis 6 ist nicht erforderlich.

Das Zugelement 20 kann durch eine endseitige Verdickung bzw. Vergrößerung, zum Beispiel in Kugelform (wie dargestellt), in dem zweiten Endbereich 42 der ersten Zugfeder 36 gehalten werden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Vorrichtung zur landwirtschaftlichen Bodenbearbeitung
- 12: Rad
- 14: Traggestell
- 16: Bodeneingriffselement
- 18: Vorspanneinrichtung
- 20: Zugelement
- 22: Verstelleinrichtung
- 24: Querelement
- 26: Querelement
- 28: Schwenkarm
- 30: Schwenkachse
- 32: Kolbenstange
- 34: Zylindergehäuse
- 36: Zugfeder
- 38: Zugfeder
- 40: Endbereich
- 42: Endbereich
- 44: Endbereich
- 46: Endbereich
- 48: Halteelement
- 50: Ring

## Patentansprüche

1. Vorspanneinrichtung (18) für eine Vorrichtung (10) zur landwirtschaftlichen Bodenbearbeitung, vorzugsweise Striegel, zum Vorspannen eines verbundenen Bodeneingriffselements (16), vorzugsweise Striegelzinkens, der Vorrichtung (10), aufweisend:
eine erste Zugfeder (36);
**gekennzeichnet durch**:
eine zweite Zugfeder (38),
wobei die erste Zugfeder (36) und die zweite Zugfeder (38) so angeordnet sind, dass die zweite Zugfeder (38) erst nach einer vorbestimmten Dehnung der ersten Zugfeder (36) zur Vorspannung des verbundenen Bodeneingriffselements (16) beiträgt und/oder gedehnt wird.

2. Vorspanneinrichtung (18) nach Anspruch 1, wobei:
die erste Zugfeder (36) und die zweite Zugfeder (38) koaxial angeordnet sind, und/oder
die erste Zugfeder (36) zumindest teilweise, vorzugsweise vollständig, innerhalb der zweiten Zugfeder (38) angeordnet ist.

3. Vorspanneinrichtung (18) nach Anspruch 1 oder Anspruch 2, wobei:
erste Endbereiche (40, 44) der ersten Zugfeder (36) und der zweiten Zugfeder (38) relativ zueinander festgelegt sind, vorzugsweise mittelbar oder unmittelbar; und/oder
zweite Endbereiche (42, 46) der ersten Zugfeder (36) und der zweiten Zugfeder (38) relativ zueinander bewegbar sind,
wobei vorzugsweise:
die ersten Endbereiche (40, 44) dem verbunden Bodeneingriffselement (16) zugewandte Endbereiche sind und/oder die zweiten Endbereiche (42, 46) dem verbunden Bodeneingriffselement (16) abgewandte Endbereiche sind.

4. Vorspanneinrichtung (18) nach Anspruch 3, wobei:
die ersten Endbereiche (40, 44) durch eine gemeinsame Anbringung an dem verbundenen Bodeneingriffselement (16) zueinander festgelegt sind; und/oder
die ersten Endbereiche (40, 44) direkt miteinander verbunden sind; und/oder
die ersten Endbereiche (40, 44) mittels Formschluss aneinander festgelegt sind; und/oder
der erste Endbereich (40) der ersten Zugfeder (36) eine, vorzugsweise konusförmige, Querschnittserweiterung zur Festlegung relativ zu der zweiten Zugfeder (38) aufweist.

5. Vorspanneinrichtung (18) nach Anspruch 3 oder Anspruch 4, wobei:
der zweite Endbereich (46) der zweiten Zugfeder (38) einen, vorzugsweise konusförmigen, Anschlag für den zweiten Endbereich (42) der ersten Zugfeder (36) bildet,
wobei vorzugsweise:
bevor der zweite Endbereich (42) der ersten Zugfeder (36) den Anschlag erreicht, die Vorspannung nur durch die erste Zugfeder (36) bewirkt ist; und/oder
erst ab Erreichen des Anschlags durch den zweiten Endbereich (42) der ersten Zugfeder (36), die Vorspannung von der ersten Zugfeder (36) und der zweiten Zugfeder (38) bewirkt ist.

6. Vorspanneinrichtung (18) nach einem der Ansprüche 3 bis 5, wobei:
an dem zweiten Endbereich (42) der ersten Zugfeder (36) ein bewegbares Zugelement (20), vorzugsweise ein Zugseil, zum Anpassen einer durch die Vorspanneinrichtung (18) bewirkten Vorspannung des verbundenen Bodeneingriffselements (16) angebracht ist,
wobei vorzugsweise:
sich der zweite Endbereich (42) der ersten Zugfeder (36) zum Halten des Zugelements (20) verjüngt; und/oder
der zweite Endbereich (42) der ersten Zugfeder (36) ein, vorzugsweise konusförmiges, Halteelement (48) zum Halten des Zugelements (20) hält, vorzugsweise umgreift.

7. Vorrichtung (10) zur landwirtschaftlichen Bodenbearbeitung, vorzugsweise Striegel, aufweisend:
mehrere, vorzugsweise verschwenkbare, Bodeneingriffselemente (16), bevorzugt Striegelzinken, zur Bodenbearbeitung; und
mehrere Vorspanneinrichtungen (18) nach einem der vorherigen Ansprüche, die zum Vorspannen der mehreren Bodeneingriffselemente (16) angeordnet sind.

8. Vorrichtung (10) nach Anspruch 7, wobei:
die mehreren Vorspanneinrichtungen (18) an einem freien, bodenabgewandten Ende der den mehreren Bodeneingriffselemente (16) mit den mehreren Bodeneingriffselementen (16) verbunden sind; und/oder
die Vorrichtung (10) ein Traggestell (14), das die mehreren Bodeneingriffselemente (16), vorzugsweise verschwenkbar, trägt, aufweist und die mehreren Vorspanneinrichtungen (18) mit den mehreren Bodeneingriffselementen (16) oberhalb des Traggestells (14) verbunden sind.

9. Vorrichtung (10) nach Anspruch 7 oder Anspruch 8, ferner aufweisend:
mehrere Zugelemente (20), vorzugsweise Zugseile, die die mehreren Vorspanneinrichtungen (18) mit einer, vorzugsweise motorischen, Verstelleinrichtung (22) zum Verändern der Vorspannung verbinden,
wobei vorzugsweise:
die Verstelleinrichtung (22) einen Linearzylinder, bevorzugt Gleichlaufzylinder, zum Bewegen der mehreren Zugelemente (20) aufweist; und/oder
die Verstelleinrichtung (22) an einem hinteren Ende der Vorrichtung (10) angeordnet ist.

10. Vorrichtung (10) nach Anspruch 9, wobei:
die Verstelleinrichtung (22) manuell einstellbar ist; und/oder
die Verstelleinrichtung (22) selbsttätig oder automatisch einstellbar ist, vorzugsweise in Abhängigkeit von einer Ausrichtung der Bodeneingriffselemente (16) bezüglich eines Traggestells (14) der Vorrichtung (10), einer Arbeitstiefe mindestens eines der mehreren Bodeneingriffselemente (16) und/oder einer Vorspannkraft mindestens einer der mehreren Vorspanneinrichtungen (18).

11. Vorrichtung (10) nach einem der Ansprüche 9 oder 10, wobei:
die mehreren Zugelemente (20) die mehreren Vorspanneinrichtungen (18) mit einem zum Verändern der Vorspannung verschwenkbaren Querelement (26), vorzugsweise Querstange oder Querrohr, der Verstelleinrichtung (22) verbinden, vorzugsweise direkt und/oder ohne Umlenkrollen,
wobei vorzugsweise:
das Querelement (26) in einem Winkelbereich zwischen 0° und 60° verschwenkbar ist; und/oder
das Querelement (26) über einen Schwenkarm (28) und eine Schwenkachse (30), die an einem Traggestell (14) der Vorrichtung (10) getragenen ist, verschwenkbar ist.

12. Vorrichtung (10) nach einem der Ansprüche 9 bis 11, ferner aufweisend:
ein Traggestell (14), das die mehreren Bodeneingriffselemente (16) und die Verstelleinrichtung (22) trägt.

13. Vorrichtung (10) nach Anspruch 12, wobei:
die mehreren Vorspanneinrichtungen (18), die mehrere Zugelemente (20) und die Verstelleinrichtung (22) oberhalb des Traggestells (14) angeordnet sind; und/oder
die mehreren Vorspanneinrichtungen (18) und die mehrere Zugelemente (20) horizontal und/oder parallel zum Traggestell (14) ausgerichtet sind; und/oder
das Traggestell (14) mehrere, vorzugsweise über Kopf, einklappbare Segmente zum Verringern einer Breite der Vorrichtung (10) zum Transportieren der Vorrichtung (10) aufweist; und/oder
das Traggestell (14) mehrere, vorzugsweise in einer Längsrichtung der Vorrichtung (10) beabstandete und drehbare Querelemente (24) zum Tragen der mehreren Bodeneingriffselemente (16), trägt, die auf einer Höhe mit und/oder in dem Traggestell (14) angeordnet sind.

14. Vorrichtung (10) nach einem der Ansprüche 7 bis 13, wobei:
sich jeweils mindestens zwei Vorspanneinrichtungen (18) ein Zugelement (20), vorzugsweise Zugseil, zur Verbindung mit einer, vorzugsweise motorischen, Verstelleinrichtung (22) der Vorrichtung (10) teilen.

15. Vorrichtung (10) nach Anspruch 14, wobei:
die jeweils zwei Vorspanneinrichtungen (18) mit entgegengesetzten Enden des Zugelements (20) verbunden, vorzugsweise daran angebracht, sind; und/oder
die mit den jeweils zwei Vorspanneinrichtungen (18) verbundenen Bodeneingriffselemente (16) bezüglich einer Querrichtung und/oder einer Längsrichtung der Vorrichtung (10) voneinander beabstandet sind, vorzugsweise direkt benachbart zueinander; und/oder
die mehreren Bodeneingriffselemente (16) bezüglich einer Längsrichtung der Vorrichtung (10) in mehreren Reihen angeordnet sind und die mit den jeweils zwei Vorspanneinrichtungen (18) verbundenen Bodeneingriffselemente (16) in unterschiedlichen Reihen angeordnet sind, vorzugsweise in direkt benachbarten Reihen.

## Claims

1. Pre-tensioning device (18) for a device (10) for agricultural soil cultivation, preferably a harrow, for pre-tensioning a connected soil engaging element (16), preferably a harrow tine, of the device (10), comprising:
a first tension spring (36);
**characterized by**:
a second tension spring (38),
wherein the first tension spring (36) and the second tension spring (38) are arranged such that the second tension spring (38) only contributes to pre-tensioning the connected soil engaging element (16) and/or is stretched after a predetermined elongation of the first tension spring (36).

2. Pre-tensioning device (18) according to claim 1, wherein:
the first tension spring (36) and the second tension spring (38) are arranged coaxially, and/or
the first tension spring (36) is arranged at least partially, preferably completely, inside the second tension spring (38).

3. Pre-tensioning device (18) according to claim 1 or claim 2, wherein:
first end regions (40, 44) of the first tension spring (36) and the second tension spring (38) are fixed relative to each other, preferably directly or indirectly; and/or
second end regions (42, 46) of the first tension spring (36) and the second tension spring (38) are movable relative to one another,
wherein preferably:
the first end regions (40, 44) are end regions facing the connected soil engaging element (16) and/or the second end regions (42, 46) are end regions facing away from the connected soil engaging element (16).

4. Pre-tensioning device (18) according to claim 3, wherein:
the first end regions (40, 44) are fixed to each other by a common attachment to the connected soil engaging element (16); and/or
the first end regions (40, 44) are directly connected to each other; and/or
the first end regions (40, 44) are fixed to each other by means of a positive fit; and/or
the first end region (40) of the first tension spring (36) comprises a, preferably conical, cross-sectional widening for fixing relative to the second tension spring (38).

5. Pre-tensioning device (18) according to claim 3 or claim 4, wherein:
the second end region (46) of the second tension spring (38) forms a, preferably conical, stop for the second end region (42) of the first tension spring (36),
wherein preferably:
before the second end region (42) of the first tension spring (36) reaches the stop, the pre-tensioning is effected only by the first tension spring (36); and/or
only after the second end region (42) of the first tension spring (36) reaches the stop is the pretensioning effected by the first tension spring (36) and the second tension spring (38).

6. Pre-tensioning device (18) according to any one of claims 3 to 5, wherein:
a movable pull element (20), preferably a tension cable, is attached to the second end region (42) of the first tension spring (36) for adjusting a pre-tensioning of the connected soil engaging element (16) effected by the pre-tensioning device (18),
wherein preferably:
the second end region (42) of the first tension spring (36) is tapered for holding the pull element (20); and/or
the second end region (42) of the first tension spring (36) holds, preferably embraces, a, preferably conical, holding element (48) for holding the pull element (20).

7. Device (10) for agricultural soil cultivation, preferably a harrow, comprising
multiple, preferably pivotable, soil engaging elements (16), preferably harrow tines, for soil cultivation; and
multiple pre-tensioning devices (18) according to one of the preceding claims, arranged for pre-tensioning the multiple soil engaging elements (16).

8. Device (10) according to claim 7, wherein:
the multiple pre-tensioning devices (18) are connected to the multiple soil engaging elements (16) at a free, off-ground end of the multiple soil engaging elements (16); and/or
the device (10) comprises a support frame (14) which supports the multiple soil engaging elements (16), preferably pivotably, and the multiple pre-tensioning devices (18) are connected to the multiple soil engaging elements (16) above the support frame (14).

9. Device (10) according to claim 7 or claim 8, further comprising:
multiple pull elements (20), preferably traction cables, connecting the multiple pre-tensioning devices (18) to an, preferably motorized, adjusting device (22) for varying the pre-tension,
wherein preferably:
the adjusting device (22) comprises a linear cylinder, preferably a synchronized cylinder, for moving the multiple pull elements (20); and/or
the adjusting device (22) is arranged at a rear end of the device (10).

10. Device (10) according to claim 9, wherein:
the adjusting device (22) is manually adjustable; and/or
the adjusting device (22) is automatically or automatically adjustable, preferably as a function of an orientation of the soil engaging elements (16) with respect to a support frame (14) of the device (10), a working depth of at least one of the multiple soil engaging elements (16) and/or a pre-tensioning force of at least one of the multiple pre-tensioning devices (18).

11. Device (10) according to any one of claims 9 or 10, wherein:
the multiple pull elements (20) connect the multiple pre-tensioning devices (18) to a cross element (26), preferably transverse rod or transverse tube, of the adjusting device (22) being pivotable to change the pre-tensioning force, preferably directly and/or without deflection rollers,
wherein preferably:
the cross element (26) is pivotable in an angular range between 0° and 60°; and/or
the cross element (26) is pivotable via a pivot arm (28) and a pivot axis (30), which is carried on a support frame (14) of the device (10).

12. Device (10) according to any one of claims 9 to 11, further comprising:
a support frame (14) carrying the multiple soil engaging elements (16) and the adjusting device (22).

13. Device (10) according to claim 12, wherein:
the multiple pre-tensioning devices (18), the multiple pull elements (20) and the adjusting device (22) are arranged above the support frame (14); and/or
the multiple pre-tensioning devices (18) and the multiple pull elements (20) are oriented horizontally and/or parallel to the support frame (14); and/or
the support frame (14) comprises multiple segments being foldable, preferably overhead, for reducing a width of the device (10) for transporting the device (10); and/or
the support frame (14) carries multiple cross elements (24), preferably spaced apart in a longitudinal direction of the device (10) and rotatable, for carrying the multiple soil engaging elements (16), which are arranged at a height with and/or in the support frame (14).

14. Device (10) according to any one of claims 7 to 13, wherein:
at least two pre-tensioning devices (18) in each case share a pull element (20), preferably traction cable, for connection to a, preferably motorized, adjusting device (22) of the device (10).

15. Device (10) according to claim 14, wherein:
the respective two pre-tensioning devices (18) are connected to opposite ends of the pull element (20), preferably attached thereto; and/or
the soil engaging elements (16) connected to the respective two pre-tensioning devices (18) are spaced apart from each other with respect to a lateral direction and/or a longitudinal direction of the device (10), preferably directly adjacent to each other; and/or
the multiple soil engaging elements (16) are arranged in multiple rows with respect to a longitudinal direction of the device (10) and the soil engaging elements (16) connected to the respective two pre-tensioning devices (18) are arranged in different rows, preferably in directly adjacent rows.

## Revendications

1. Appareil de précontrainte (18) pour un dispositif (10) destiné au travail agricole du sol, de préférence une herse, pour précontraindre un élément d'intervention dans le sol (16) relié, de préférence une dent de herse, le dispositif (10) présentant :
un premier ressort de traction (36) ;
**caractérisé par** :
un deuxième ressort de traction (38),
le premier ressort de traction (36) et le deuxième ressort de traction (38) étant agencés de telle sorte que le deuxième ressort de traction (38) ne contribue à la précontrainte de l'élément d'intervention dans le sol (16) relié et/ou ne soit tendu qu'après un allongement prédéterminé du premier ressort de traction (36).

2. Appareil de précontrainte (18) selon la revendication 1, dans lequel :
le premier ressort de traction (36) et le deuxième ressort de traction (38) sont agencés de manière coaxiale, et/ou
le premier ressort de traction (36) est agencé au moins partiellement, de préférence entièrement, à l'intérieur du deuxième ressort de traction (38).

3. Appareil de précontrainte (18) selon la revendication 1 ou la revendication 2, dans lequel :
les premières zones d'extrémité (40, 44) du premier ressort de traction (36) et du deuxième ressort de traction (38) sont fixées l'une par rapport à l'autre, de préférence directement ou indirectement ; et/ou
les deuxièmes zones d'extrémité (42, 46) du premier ressort de traction (36) et du deuxième ressort de traction (38) sont mobiles l'une par rapport à l'autre,
dans lequel de préférence :
les premières zones d'extrémité (40, 44) sont des zones d'extrémité tournées vers l'élément d'intervention dans le sol (16) relié et/ou les deuxièmes zones d'extrémité (42, 46) sont des zones d'extrémité détournées de l'élément d'intervention dans le sol (16) relié.

4. Appareil de précontrainte (18) selon la revendication 3, dans lequel :
les premières zones d'extrémité (40, 44) sont fixées l'une par rapport à l'autre par un montage commun sur l'élément d'intervention dans le sol (16) relié ; et/ou
les premières zones d'extrémité (40, 44) sont directement reliées entre elles ; et/ou
les premières zones d'extrémité (40, 44) sont fixées l'une à l'autre par complémentarité de forme ; et/ou
la première zone d'extrémité (40) du premier ressort de traction (36) présente un élargissement de section transversale, de préférence conique, pour la fixation par rapport au deuxième ressort de traction (38).

5. Appareil de précontrainte (18) selon la revendication 3 ou la revendication 4, dans lequel :
la deuxième zone d'extrémité (46) du deuxième ressort de traction (38) forme une butée, de préférence conique, pour la deuxième zone d'extrémité (42) du premier ressort de traction (36),
dans lequel de préférence :
avant que la deuxième extrémité (42) du premier ressort de traction (36) n'atteigne la butée, la précontrainte est uniquement exercée par le premier ressort de traction (36) ; et/ou
uniquement lorsque la deuxième zone d'extrémité (42) du premier ressort de traction (36) atteint la butée, la précontrainte est exercée par le premier ressort de traction (36) et le deuxième ressort de traction (38).

6. Appareil de précontrainte (18) selon l'une quelconque des revendications 3 à 5, dans lequel :
un élément de traction mobile (20), de préférence un câble de traction, est monté sur la deuxième zone d'extrémité (42) du premier ressort de traction (36) afin d'ajuster une précontrainte exercée par l'appareil de précontrainte (18) sur l'élément d'intervention dans le sol (16) relié,
dans lequel de préférence :
la deuxième zone d'extrémité (42) du premier ressort de traction (36) se rétrécit pour maintenir l'élément de traction (20) ; et/ou
la deuxième extrémité (42) du premier ressort de traction (36) maintient, de préférence en l'enserrant, un élément de retenue (48), de préférence de forme conique, destiné à retenir l'élément de traction (20).

7. Dispositif (10) pour le travail agricole du sol, de préférence herse, présentant :
plusieurs éléments d'intervention dans le sol (16), de préférence pivotants, de préférence des dents de herse, pour le travail du sol ; et
plusieurs appareils de précontrainte (18) selon l'une quelconque des revendications précédentes, qui sont agencés pour précontraindre les plusieurs éléments d'intervention dans le sol (16).

8. Dispositif (10) selon la revendication 7, dans lequel :
les plusieurs appareils de précontrainte (18) sont reliés aux plusieurs éléments d'intervention dans le sol (16) à une extrémité libre, détournée du sol, des plusieurs éléments d'intervention dans le sol (16) ; et/ou
le dispositif (10) présente un châssis de support (14) qui supporte les plusieurs éléments d'intervention dans le sol (16), de préférence de manière pivotante, et les plusieurs appareils de précontrainte (18) sont reliés aux plusieurs éléments d'intervention dans le sol (16) au-dessus du châssis de support (14).

9. Dispositif (10) selon la revendication 7 ou la revendication 8, présentant en outre :
plusieurs éléments de traction (20), de préférence câbles de traction, qui relient les plusieurs appareils de précontrainte (18) à un appareil de réglage (22), de préférence motorisé, destiné à modifier la précontrainte, dans lequel de préférence :
l'appareil de réglage (22) présente un vérin linéaire, de préférence un vérin synchrone, pour déplacer les plusieurs éléments de traction (20) ; et/ou
l'appareil de réglage (22) est agencé à une extrémité arrière du dispositif (10).

10. Dispositif (10) selon la revendication 9, dans lequel :
l'appareil de réglage (22) est réglable manuellement ; et/ou
l'appareil de réglage (22) est réglable de manière autonome ou automatiquement, de préférence en fonction d'une orientation des éléments d'intervention dans le sol (16) par rapport à un châssis de support (14) du dispositif (10), d'une profondeur de travail d'au moins l'un des plusieurs éléments d'intervention dans le sol (16) et/ou d'une force de précontrainte d'au moins l'un des plusieurs appareils de précontrainte (18).

11. Dispositif (10) selon l'une quelconque des revendications 9 ou 10, dans lequel :
les plusieurs éléments de traction (20) relient les plusieurs appareils de précontrainte (18) à l'appareil de réglage (22) à l'aide d'un élément transversal (26) pivotant, de préférence une barre transversale ou un tube transversal, pour modifier la précontrainte, de préférence directement et/ou sans poulies de renvoi,
dans lequel de préférence :
l'élément transversal (26) peut pivoter dans une plage angulaire comprise entre 0° et 60° ; et/ou
l'élément transversal (26) peut pivoter via un bras pivotant (28) et un axe de pivotement (30) qui est supporté par un châssis de support (14) du dispositif (10).

12. Dispositif (10) selon l'une quelconque des revendications 9 à 11, présentant en outre :
un châssis de support (14) qui supporte les plusieurs éléments d'intervention dans le sol (16) et l'appareil de réglage (22).

13. Dispositif (10) selon la revendication 12, dans lequel :
les plusieurs appareils de précontrainte (18), les plusieurs éléments de traction (20) et l'appareil de réglage (22) sont agencés au-dessus du châssis de support (14) ; et/ou
les plusieurs appareils de précontrainte (18) et les plusieurs éléments de traction (20) sont orientés horizontalement et/ou parallèlement au châssis de support (14) ; et/ou
le châssis de support (14) présente plusieurs segments repliables, de préférence vers le haut, afin de réduire une largeur du dispositif (10) pour le transport du dispositif (10) ; et/ou
le châssis de support (14) supporte plusieurs éléments transversaux (24) espacés, de préférence dans une direction longitudinale du dispositif (10), et rotatifs, destinés à supporter les plusieurs éléments d'intervention dans le sol (16) qui sont agencés à hauteur et/ou dans le châssis de support (14).

14. Dispositif (10) selon l'une quelconque des revendications 7 à 13, dans lequel :
au moins deux appareils de précontrainte (18) se partagent un élément de traction (20), de préférence un câble de traction, pour la liaison avec un appareil de réglage (22), de préférence motorisé, du dispositif (10).

15. Dispositif (10) selon la revendication 14, dans lequel :
les deux appareils de précontrainte (18) sont reliés aux extrémités opposées de l'élément de traction (20), de préférence montés sur celles-ci ; et/ou
les éléments d'intervention dans le sol (16) reliés aux deux appareils de précontrainte (18) respectifs sont espacés les uns des autres dans une direction transversale et/ou dans une direction longitudinale du dispositif (10), de préférence directement voisins les uns des autres ; et/ou
les plusieurs éléments d'intervention dans le sol (16) sont agencés en plusieurs rangées par rapport à une direction longitudinale du dispositif (10) et les éléments d'intervention dans le sol (16) reliés aux deux appareils de précontrainte (18) respectifs sont agencés dans des rangées différentes, de préférence dans des rangées directement voisines.
